# EUROPEAN PATENT SPECIFICATION

(11) **EP 1 372 203 B1**
(45) Date of publication and mention of the grant of the patent: **20.07.2005**
(21) Application number: 03011756.8
(22) Date of filing: 23.05.2003
(51) Int. Cl.: H01M 8/02, H01M 8/24

(54) **Membrane electrode assembly for an electrochemical fuel cell**
Membranelektrodeneinheit für Brennstoffzellen
Assemblage membrane-électrodes pour des piles à combustible

(30) Priority: 30.05.2002 US 158418
(43) Date of publication of application: 17.12.2003
(73) Proprietor: BALLARD POWER SYSTEMS INC., Burnaby, B.C. V5J 5J9 (CA)
(72) Inventor: Vanderleeden, Olen R., Coquitlam, BC V3K 5Z8 (CA); Zimmermann, Joerg, Vancouver, BC V6Z 2N2 (CA)
(74) Representative: Beyer, Andreas, Dr.

(56) References cited:
- EP-A- 0 951 086
- EP-A- 1 156 546
- US-A- 6 159 628

## Description

### Field of the Invention

The present invention relates to electrochemical fuel cells. In particular, the invention provides an improved membrane electrode assembly for a fuel cell, and a method of making an improved membrane electrode assembly. The improved membrane electrode assembly comprises integral fluid impermeable seals and coextensive electrode and membrane layers.

### Background of the Invention

Electrochemical fuel cells convert reactants, namely, fuel and oxidant fluid streams, to generate electric power and reaction products. Electrochemical fuel cells employ an electrolyte disposed between two electrodes, namely a cathode and an anode. The electrodes each comprise an electrocatalyst disposed at the interface between the electrolyte and the electrodes to induce the desired electrochemical reactions. The location of the electrocatalyst generally defines the electrochemically active area.

Solid polymer fuel cells generally employ a membrane electrode assembly ("MEA") consisting of a solid polymer electrolyte or ion exchange membrane disposed between two electrode layers comprising porous, electrically conductive sheet material. The membrane is ion conductive (typically proton conductive), and also acts as a barrier for isolating the reactant streams from each other. Another function of the membrane is to act as an electrical insulator between the two electrode layers. The electrodes should be electrically insulated from each other to prevent short-circuiting. If a multi-layer MEA is cut, tiny portions of the electrically conductive electrode material, such as stray fibers, may bridge across the thin membrane, interconnecting the electrodes, which could cause electrical short-circuiting in an operating fuel cell. Conventional MEAs incorporate a membrane with a larger surface area than the electrode layers, with at least a small portion of the membrane extending laterally beyond the edge of the electrode layers. The protruding membrane edge helps to prevent short-circuiting between the electrodes around the edge of the membrane. A problem with this is that it is difficult to cut an MEA after the electrodes have been joined to the membrane so that the thin membrane has a larger area than the electrodes. A conventional MEA is fabricated by manufacturing and cutting the electrodes and membrane layers separately. After the electrodes and membrane have been cut to the desired size and shape, the cut electrode layers are laminated with the cut membrane layer. These steps are not conducive to high speed manufacturing processes. It would be preferable to manufacture a sheet or roll of MEA material that already comprises the electrode and membrane layers, wherein this multi-layer material could then be cut to the desired size and shape for individual MEAs. An MEA cut in this way, such that the electrodes and membrane are coextensive, is described herein as being a "flush cut" MEA. However, this approach has heretofore been impractical because of the short-circuiting problem described above.

It is desirable to seal reactant fluid stream passages to prevent leaks or inter-mixing of the fuel and oxidant fluid streams. Fuel cell stacks typically employ resilient seals between stack components. Such seals isolate the manifolds and the electrochemically active area of the fuel cell MEAs by circumscribing these areas. For example, a fluid tight seal can be achieved in a conventional fuel cell stack by using elastomeric gasket seals interposed between the flow field plates and the membrane, with sealing effected by applying a compressive force to the resilient gasket. Accordingly, it is important for conventional fuel cell stacks to be equipped with seals and a suitable compression assembly for applying a compressive force to the seals.

Conventional methods of sealing around plate manifold openings and MEAs within fuel cells include framing the MEA with a resilient fluid impermeable gasket, placing preformed gaskets in channels in the electrode layers and/or separator plates, or molding seals within grooves in the electrode layer or separator plate, circumscribing the electrochemically active area and any fluid manifold openings. Examples of conventional methods are disclosed in U.S. Patent Nos. 5,176,966 and 5,284,718. Typically, the gasket seals are cut from a sheet of gasket material. For a gasket seal that seals around the electrochemically active area of the MEA, the central portion of the sheet is cut away. This procedure results in a large amount of the gasket material being wasted. Because the electrodes are porous, for the gasket seals to operate effectively, the gasket seals ordinarily are in direct contact with the flow field plates and the ion exchange membrane. Therefore, in a conventional MEA, electrode material is cut away in the sealing regions so that the gasket will contact the ion exchange membrane. Some MEAs employ additional thin-film layers to protect the ion exchange membrane where it would otherwise be exposed in the gasket seal areas. Separate components such as gasket seals and thin-film layers require respective processing or assembly steps, which add to the complexity and expense of manufacturing fuel cell stacks.

EP 1 156 546 A1 discloses a membrane electrode assembly with resilient integral seals for use in an electrochemical fuel cell. The membrane electrode assembly comprises an ion exchange membrane interposed between two electrode layers and an electrocatalyst disposed on interfacing surfaces between the membrane and the electrode layers. For manufacturing the membrane electrode assembly sealing regions of the electrode layers are impregnated with a fluid impermeable curable flow processable sealant material to form the integral seal which comprises a raised rib and which envelops an edge region of the coextensive electrode layers and the membrane. The resilient sealant materials used in EP 1 156 546 A1 include silicones, fluoroelastomers, fluorosilicones, ethylene propylene di-methyl and natural rubber.

EP 0 951 086 A2 relates to a membrane electrode assembly, wherein gas-tight, electrically insulating layers are made of a thermosetting resin such as silicone resin or phenolic resin or a thermoplastic resin or a rubber such as silicone rubber or butadiene rubber.

Accordingly, it is desirable to simplify and reduce the number of individual or separate components involved in sealing in a fuel cell stack since this reduces assembly time and the cost of manufacturing.

### Summary of the Invention

An improved MEA for an electrochemical fuel cell and methods for making the improved MEA are provided. In one embodiment, the MEA comprises
a first porous electrode layer;
a second porous electrode layer;
an ion exchange membrane interposed between the first and second porous electrode layers wherein the first and second electrode layers and the membrane are coextensive;
a quantity of electrocatalyst disposed at the interface between the ion exchange membrane and each of the first and second porous electrode layers, thereby defining an electrochemically active area on each of the first and second electrode layers; and
a fluid impermeable seal integral with the membrane electrode assembly, the seal comprising a rigid sealant material impregnated into the first and second porous electrode layers in sealing regions thereof and having at least one raised rib, wherein the seal envelops a peripheral region of both first and second electrodes and the ion exchange membrane.

The integral seal envelops the peripheral region including the side edge of the MEA. The integral seal can circumscribe the electrochemically active area of the MEA and can also extend laterally beyond the edge of the MEA. An integral seal can also be provided around any openings, such as manifold openings, that are formed inside or outside the MEA. The seal has sealing features, such as raised ribs, and can also have alignment features. Sealing and/or alignment features can be formed from the rigid sealant material or from resilient sealant material applied to the surface of the integral seal.

In one embodiment, the method of making the present MEA comprises:
placing an ion exchange membrane between first and second porous electrode layers;
bonding the ion exchange membrane to the first and second electrode layers;
placing the first and second electrode layers and the ion exchange membrane between two sheets of rigid sealant material;
bonding the sheets of rigid sealant material together;
impregnating a portion of the rigid sealant material into portions of the first and second electrode layers to form an integral seal; and
forming at least one rib in at least one major surface of the integral seal.

The sheets of rigid sealant material can have external manifold openings formed therein before, during or after bonding. Similarly, sealing, alignment and/or fluid distribution features can be formed in the sheets before, during or after bonding. Alternatively, such features can be formed from resilient sealing material applied to one or both surfaces of the integral seal.

### Brief Description of the Drawings

In the drawings, identical reference numbers identify similar elements or acts. The sizes and relative positions of elements in the drawings are not necessarily drawn to scale. For example, the shapes of various elements and angles are not drawn to scale, and some of these elements are arbitrarily enlarged and positioned to improve drawing legibility. Further, the particular shapes of the elements as drawn, are not intended to convey any information regarding the actual shape of the particular elements, and have been solely selected for ease of recognition in the drawings.
- FIG. 1: is a plan view of an embodiment of the present improved membrane electrode assembly.
- FIG. 2: is a plan view of another embodiment of the present improved membrane electrode assembly.
- FIGs. 3a, 3b and 3c: are partial section views of an edge portion of the membrane electrode assembly of FIGs. 1 and 2, as indicated by the section marked in FIG. 1.
- FIGs. 4a and 4b: are partial section views of the edges of embodiments of the present membrane electrode assembly interposed between two fuel cell separator plates with integral seals compressed therebetween.

### Detailed Description of Preferred Embodiment(s)

In the following description, certain specific details are set forth in order to provide a thorough understanding of the various embodiments of the present improved membrane electrode assembly. However, one skilled in the technology involved here will understand that the present improved membrane electrode assembly can be practiced without these details. In other instances, well-known structures associated polymer electrolyte fuel cells and fuel cell stacks have not been shown or described in detail to avoid unnecessarily obscuring descriptions of the embodiments of the present improved membrane electrode assembly.

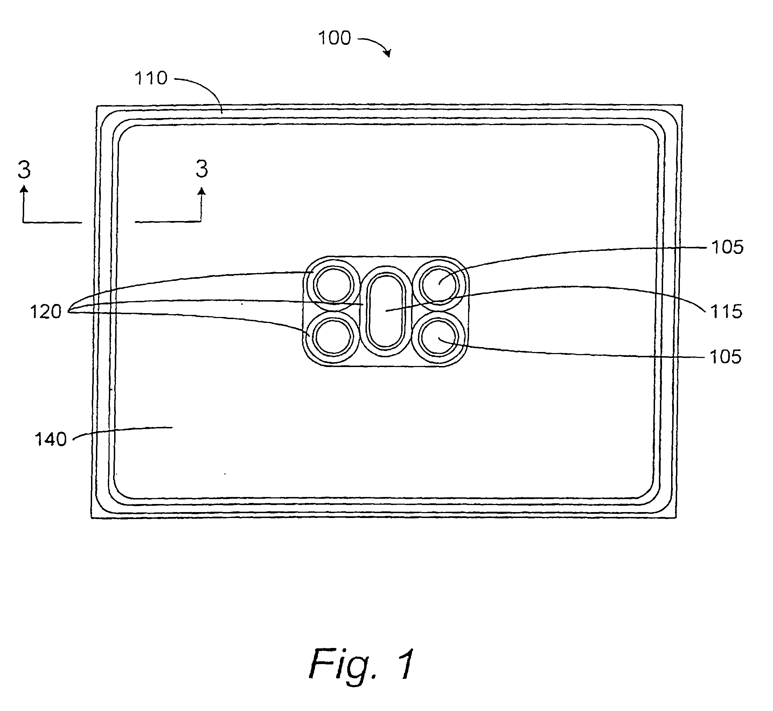

FIG. 1 shows an MEA 100 with integral seals 110, 120 that respectively circumscribe the electrochemically active area of MEA 100, and manifold openings 105 and opening 115 through which a tension member (not shown) extends. MEA 100 comprises an ion exchange membrane (not visible in FIG. 1) disposed between two porous, electrically conductive electrode layers 140.

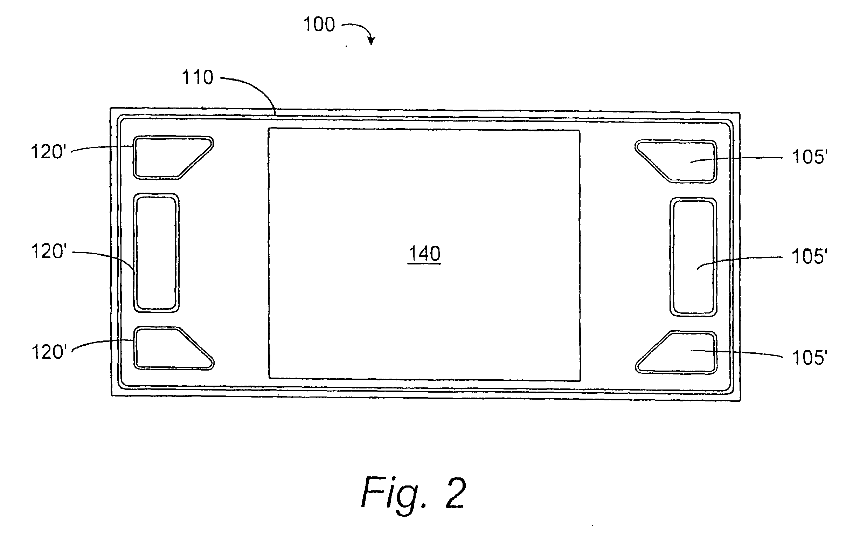

FIG. 2 shows an MEA 100 with an integral seal 110 circumscribing the electrochemically active area of MEA 100. In this embodiment, the sealant material extends from opposing sides of MEA 100 to form an external region comprising integral seals 120' for sealing external manifold openings 105'. Although not shown, MEA 100 of FIG. 2 can also incorporate an internal opening for a tension member and an integral perimeter seal circumscribing it, such as shown in FIG. 1, if desired.

Integral seals 110 and 120 comprise a rigid, fluid-impermeable sealant material that is impregnated into the porous electrode layers of MEA 100. The sealant material is chosen for mechanical and chemical resistance characteristics that are suitable for use in the fuel cell. For example, thermoplastic materials can be employed. Thermoplastic materials include thermoplastic polymers, and plastics and composites including thermoplastic polymers. Thermoset materials can also be suitable, provided they are not too brittle.

Integral seals 110 and 120 can be formed by molding the sealant material, such as injection molding. Alternatively, sheet material could be bonded to MEA 100. For example, a sheet of rigid sealant material could be thermally bonded, or two or more sheets laminated (thermally, or by the application of adhesives or solvents), so that the material is impregnated into the porous layers of MEA 100. Suitable such sealant materials available in sheet form include Teflon® (polytetrafluoroethylene), Tedlar® (polyvinyl fluoride), Oroglas® (acrylic) and Kynar® (polyvinylidene fluoride). The selection of particular rigid sealant materials is not essential to the present MEA, and persons of ordinary skill in the technology involved here can readily choose suitable such sealant materials for a given application.

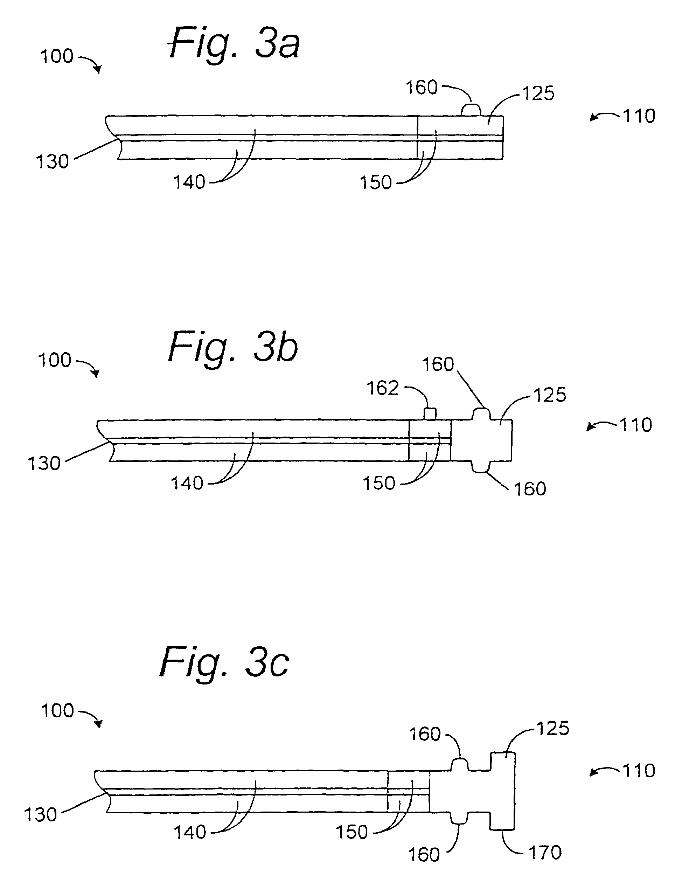

Various embodiments of an MEA 100 with an integral seal such as 110, are illustrated in cross-sectional views in FIGs. 3a, 3b and 3c. The figures depict a perimeter edge integral seal 110, such as through section 3-3 of FIG. 1, although the same configurations could also be employed for integral seal 120 at a manifold opening (as in FIG. 1). Each embodiment of an MEA 100 comprises an ion exchange membrane 130 disposed between two porous, electrically conductive electrode layers 140, and a sealant material 125 impregnated into a portion 150 of the porous electrode layers of MEA 100. At least a portion of seal 110 can protrude above the surfaces of porous electrode layers 140.

In each of the embodiments illustrated in FIGs. 3a, 3b and 3c, porous electrode layers 140 extend to the edge of ion exchange membrane 130. That is, the electrode layers 140 and the ion exchange membrane 130 are coextensive, particularly with respect to their peripheries.

In the embodiment of FIG. 3a, integral seal envelops the edge of ion exchange membrane 130. By enveloping the edge, the sealant material 125 contacts three surfaces of ion exchange membrane 130, namely portions of the two surfaces that face the two electrodes 140 and the side edge defined by the thickness of membrane 130. Integral seal 110 has a single raised rib 160.

In the embodiment of FIG. 3b, integral seal 110 extends laterally beyond the edge of MEA 100. Integral seal 110 has two raised ribs 160, in the region of the seal that extends beyond the membrane. FIG. 3b also shows an alignment feature in the form of a cylindrical plug or pin 162. Sealant material may be employed to make plug 162 that can be formed at the same time as integral seal 110. Plug 162 can cooperate with a corresponding cylindrical depression or well in the adjacent separator plate of a fuel cell to facilitate alignment of MEA 100 with the separator plates during assembly of the fuel cell.

FIG. 3c illustrates an embodiment of an integral seal 110 that has some of the same features as the embodiment depicted by FIG. 3b. FIG. 3c also illustrates the feature of a raised reference edge 170, which can be formed from the sealant material. Reference edge 170 can be employed to assist with aligning the MEA with the adjacent fuel cell components, which can be shaped to engage with reference edge 170. Alternatively, reference edge 170 can be employed during the manufacturing process to seat the MEA against a guide surface of a machine employed to assemble the fuel cells.

The multi-layer MEA 100 can be assembled and then the sealant material 125 can be impregnated into a portion 150 of the porous electrode layers 140. The integral seals for a plurality of MEAs could be injection molded onto the sheet of MEA material, impregnating a plurality of sealing regions of the porous electrode layers 140. After sealant material 125 has cured, the MEA 100 and sealant material 125 can both be cut (preferably in the sealing regions) to the desired dimensions at the same time. Because the sealant material was injection molded prior to the ion exchange membrane being cut, the two electrode layers are kept apart while the sealant material is being injected. Thus, the electrode material in the sealing regions is embedded within the electrically insulating sealant material. Cutting the multi-layer material in the sealing regions after the sealant material cures helps to prevent the possibility of short-circuiting because the cured sealant material immobilizes the embedded electrode material.

Alternatively, the multi-layer MEA 100 can be assembled and then cut to the desired shape and dimensions; then the sealant material 125 can be impregnated into a portion 150 of the porous electrode layers 140. For example, MEA 100 can be bonded together and sealant material 125 impregnated into portions 150 of the electrode layers 140. As a further example, the components of MEA 100 can be assembled, along with one or more sheets of a rigid sealant material; the bonding of MEA 100 and impregnating of sealant material 125 into electrodes 140 could then be performed simultaneously. In the embodiment of FIG. 2, for example, the components of MEA 100 can be assembled between Kynar® stencils. Application of heat and pressure would bond MEA 100 and thermally laminate the Kynar® stencils together, with a portion of the sealant material impregnating into the electrode material 140. External manifold openings can be formed in the sealant material before, during or after bonding. Thus, the MEA can be bonded and sealed in a single processing step.

In the foregoing embodiments, the portion 150 where sealant material is impregnated into porous electrode layers 140 can be selected to assist in providing improved reactant flow across MEA 100. For example, the portion 150 of MEA 100 can be selected to overlay reactant ports of adjacent flow field plates in the assembled fuel cell, to assist in directing the flow of reactants entering from the ports into flow field channels. This can also protect the portion of the ion exchange membrane overlaying the ports, which can be vulnerable to damage by the pressure of reactants entering the ports. As another example, in the embodiment of FIG. 2, the region of seal 100 between electrodes 140 and manifold openings 105' can incorporate fluid distribution features for assisting flow of reactants and/or coolant from respective manifold openings 105' to the active area of the MEA. Such features could be molded, stamped or otherwise formed in integral seal 110, as desired.

Sealing and/or alignment features can be formed from a resilient material applied to the rigid sealant material of integral seal 110, if desired. Suitable such materials include liquid injection moldable elastomeric compounds, such as silicones, fluoroelastomers, fluorosilicones, ethylene-co-propylene dimethyl and natural rubber. In the embodiment of FIG. 3a, for example, the portions of sealant material 125 on the surfaces of electrodes 140 can be formed from a resilient material, if desired. As another example, in the embodiments of FIGs. 3b and 3c, the portion of sealant material 125 extending from the end of MEA 100, or only the raised features thereof, can be formed from a resilient material. When fuel cells containing the present improved MEA are assembled into a stack and compressed, the resilient seal features deform against adjacent plates to form seals between the MEA and adjacent plates.

Particularly in embodiments employing a resilient sealant material, more complex sealing features can be employed. For example, compartmentalized seals can be formed with multiple raised ribs, such as those described in U.S. Pat. No. 6,057,054. However, the selection of particular resilient sealant materials, if employed, or the selection of seal geometry, is not essential to the present MEA, and persons of ordinary skill in the technology involved here can readily choose suitable such sealant materials and geometries for a given application.

In alternate embodiments, sealing features can be formed directly from the rigid sealant material. In these embodiments, a semi-rigid compression seal is formed between the MEA and adjacent plates. Flow field plates made from a deformable material, such as expanded graphite sheet, are pressed against the sealing features during assembly of the stack with sufficient pressure to deform the plate. The sealing feature then forms a cup and cone type seal against the plate during operation of the stack. Alignment features can also be formed directly from the rigid sealant material, if desired.

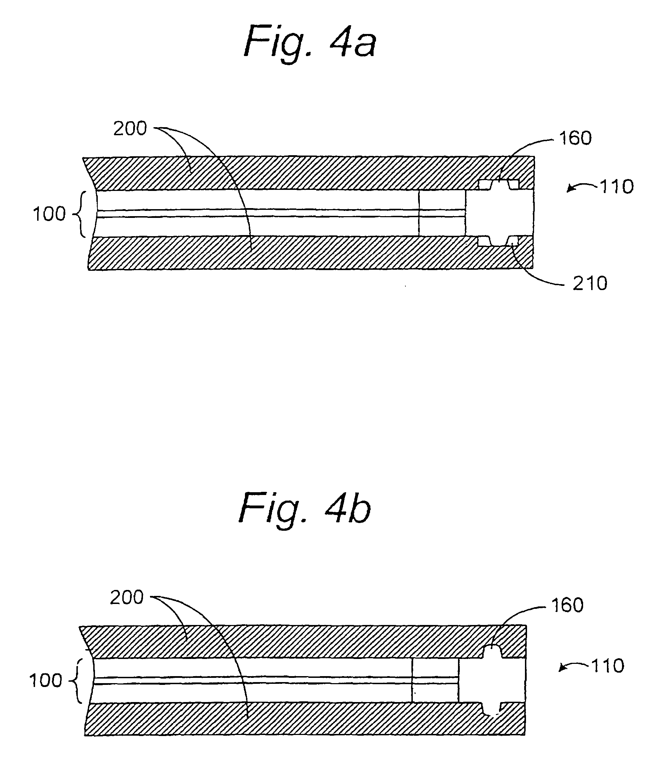

FIG. 4a depicts the MEA of FIG. 3b compressed between two separator plates 200. In FIG. 4a, the portions of sealant material 125 comprising ribs 160 are formed from a resilient material and plates 200 include a recessed groove 265. Ribs 160 deform against plates 200 in grooves 265 and form a seal. The recessed surface of groove 265 may be less prone to scoring or other damage that can occur during the manufacturing process when a number of flow field plates 200 can be stacked one on top of the other.

FIG. 4b also depicts the MEA of FIG. 3b compressed between two separator plates 200. In FIG. 4b the portions of sealant material 125 comprising ribs 160 are formed from a rigid sealant material and plates are made from a deformable material. Ribs 160 of integral seal 110 locally deform plates 200, as shown. During operation, ribs 160 form cup and cone seals with plates 200, as discussed above. Integral seal 110 can comprise more than one raised rib on or both surfaces thereof, if desired. Those skilled in the technology involved here will appreciate that additional ribs will increase the protection against leaks. A breach in one of the ribs will not result in a leak unless there are also breaches in the other rib. If desired, one of raised ribs can be located in the sealing region 150 that superposes the membrane.

## Claims

1. An improved membrane electrode assembly (100) for an electrochemical fuel cell, the membrane electrode assembly (100) comprising:
a first porous electrode layer (140);
a second porous electrode layer (140);
an ion exchange membrane (130) interposed between the first and second porous electrode layers (140) wherein the first and second electrode layers (140) and the membrane (130) are coextensive;
a quantity of electrocatalyst disposed at the interface between the ion exchange membrane (130) and each of the first and second porous electrode layers (140), thereby defining an electrochemically active area on each of the first and second electrode layers (140); and
a fluid impermeable seal (110, 120, 120') integral with the membrane electrode assembly (100), the seal (110, 120, 120') being impregnated into the first and second porous electrode layers (140) in sealing regions thereof and having at least one raised rib (160), wherein the seal (110, 120, 120') envelops a peripheral region of both first and second electrodes (140) and the ion exchange membrane (130),
**characterized in that** the seal (110, 120, 120') comprises a rigid sealant material (125).

2. The membrane electrode assembly of claim 1 wherein the sealing regions comprise regions that circumscribe the electrochemically active area.

3. The membrane electrode assembly of claim 1 wherein the sealing regions comprise regions that circumscribe an opening (105, 105') within the membrane electrode assembly (100).

4. The membrane electrode assembly of claim 1, the integral seal (110) further comprising an alignment feature (162, 170) for assisting alignment of the MEA (100) during assembly of the fuel cell.

5. The membrane electrode assembly of claim 1 wherein an outer edge of the integral seal (110) comprises a reference edge (170) for assisting assembly of the fuel cell.

6. The membrane electrode assembly of claim 1 wherein the rigid sealant material (125) is a thermoplastic material.

7. The membrane electrode assembly of claim 6 wherein the thermoplastic material is a liquid injection moldable compound.

8. The membrane electrode assembly of claim 1 wherein the sealant material (125) comprises at least one sheet of thermoplastic material.

9. The membrane electrode assembly of claim 8 wherein the sheet of thermoplastic material comprises a fluoropolymer.

10. The membrane electrode assembly of claim 8 wherein the sheet of thermoplastic material comprises polyvinylidene fluoride.

11. The membrane electrode assembly of claim 1 wherein the raised rib (160) is formed from a resilient sealing material.

12. The membrane electrode assembly of claim 11 wherein the resilient sealing material is an elastomeric compound.

13. The membrane electrode assembly of claim 12 wherein the elastomeric compound is selected from the group consisting of silicones, fluorosilicones, fluoroelastomers, ethylene-co-propylene dimethyl and natural rubber.

14. The membrane electrode assembly of claim 1 wherein the at least one raised rib (160) comprises at least one raised rib on each major opposing surface of the membrane electrode assembly (100).

15. The membrane electrode assembly of claim 1 wherein the seal (110) extends laterally beyond the membrane (130) and the electrode layers (140) to form an external region having manifold openings (105, 105') therein.

16. The membrane electrode assembly of claim 15 wherein the external region of the seal (110) has fluid distribution features formed therein.

17. A method of making a membrane electrode assembly (100), the membrane assembly (100) comprising first and second porous electrode layers (140) and an ion exchange membrane (130), the method comprising:
placing the ion exchange membrane (130) between the first and second electrode layers (140),
bonding the ion exchange membrane (130) to the first and second electrode layers (140),
impregnating a portion of a sealant material (125) into portions (150) of the first and second electrode layers (140) to form an integral seal (110, 120, 120'), and
forming at least one rib (160) in at least one major surface of the integral seal (110, 120, 120'),
**characterized in that** the sealant material (125) is a rigid sealant material, wherein
the first and second electrode layers (140) and the ion exchange membrane (130) are placed between two sheets of rigid sealant material (125), and wherein
the sheets of rigid sealant material (125) are bonded together.

18. The method of claim 17 wherein the bonding of the ion exchange membrane (130) to the first and second electrode layers (140), the bonding of the sheets of rigid sealant material (125), and the impregnating of the sealant material (125) into the electrode layers (140) occurs simultaneously.

19. The method of claim 17 wherein the step of bonding the sheets of rigid sealant material (125) together comprises applying an adhesive to at least one of the sheets.

20. The method of claim 17 wherein the step of bonding the sheets of rigid sealant material (125) together comprises applying a solvent to at least one of the sheets.

21. The method of claim 17 wherein the step of bonding the sheets of rigid sealant material (125) together comprises applying heat and pressure thereto.

22. The method of claim 17 wherein the at least one raised rib (160) is formed by applying a resilient sealing material to the surface of at least one of the sheets of rigid sealant material (125).

23. The method of claim 17 wherein the integral seal (110) extends laterally beyond the membrane (130) and the electrode layers (140) to form an external region, the method further comprising forming manifold openings (105, 105') in the external region of the seal (110, 120, 120').

24. The method of claim 23, further comprising forming fluid distribution features in the external region of the seal (110).

## Patentansprüche

1. Verbesserte Membran-Elektroden-Anordnung (100) für eine elektrochemische Brennstoffzelle, wobei die Membran-Elektroden-Anordnung (100) umfasst:
eine erste poröse Elektrodenschicht (140);
eine zweite poröse Elektrodenschicht (140);
eine zwischen den ersten und zweiten porösen Elektrodenschichten (140) angeordnete Ionenaustauschmembran (130), wobei die ersten und zweiten Elektrodenschichten (140) und die Membran (130) koextensiv zueinander sind;
eine Menge eines Elektrokatalysators, der an der Grenzfläche zwischen der Ionenaustauschmembran (130) und jeder der ersten und zweiten porösen Elektrodenschichten (140) angeordnet ist, wodurch ein elektrochemisch aktiver Bereich auf jeder der ersten und zweiten Elektrodenschichten (140) festgelegt wird; und
eine integriert mit der Membran-Elektroden-Anordnung (100) ausgebildete fluidundurchlässige Dichtung (110, 120, 120'), wobei die Dichtung (110, 120, 120') in deren Dichtungsbereichen in die ersten und zweiten porösen Elektrodenschichten (140) imprägniert ist und mindestens eine erhöhte Rippe (160) aufweist, wobei die Dichtung (110, 120, 120') einen Umfangsbereich sowohl der ersten und zweiten Elektroden (140) als auch der Ionenaustauschmembran (130) umgibt,
**dadurch gekennzeichnet, dass** die Dichtung (110, 120, 120') ein starres Dichtungsmaterial (125) umfasst.

2. Membran-Elektroden-Anordnung nach Anspruch 1, bei der die Dichtungsbereiche Bereiche umfassen, die den elektrochemisch aktiven Bereich umgeben.

3. Membran-Elektroden-Anordnung nach Anspruch 1, bei der die Dichtungsbereiche Bereiche umfassen, die eine Öffnung (105, 105') in der Membran-Elektroden-Anordnung (100) umgeben.

4. Membran-Elektroden-Anordnung nach Anspruch 1, bei der die integrierte Dichtung (110) ferner eine Ausrichtungseinrichtung (162, 170) zur Unterstützung der Ausrichtung der MEA (100) während der Montage der Brennstoffzelle umfasst.

5. Membran-Elektroden-Anordnung nach Anspruch 1, bei der ein äußerer Rand der integrierten Dichtung (110) einen Referenzrand (170) zum Unterstützen des Zusammenbaus der Brennstoffzelle umfasst.

6. Membran-Elektroden-Anordnung nach Anspruch 1, bei der das starre Dichtungsmaterial (125) ein thermoplastisches Material ist.

7. Membran-Elektroden-Anordnung nach Anspruch 6, bei der das thermoplastische Material eine flüssigspritzgießbare Verbindung ist.

8. Membran-Elektroden-Anordnung nach Anspruch 1, bei der das Dichtungsmaterial (125) mindestens eine Schicht aus thermoplastischem Material umfasst.

9. Membran-Elektroden-Anordnung nach Anspruch 8, bei der die Schicht aus thermoplastischem Material ein Fluorpolymer umfasst.

10. Membran-Elektroden-Anordnung nach Anspruch 8, bei der die Schicht aus thermoplastischem Material Polyvinylidenfluorid umfasst.

11. Membran-Elektroden-Anordnung nach Anspruch 1, bei der die erhöhte Rippe (160) aus einem elastischen Dichtungsmaterial besteht.

12. Membran-Elektroden-Anordnung nach Anspruch 11, bei der das elastische Dichtungsmaterial eine Elastomerverbindung ist.

13. Membran-Elektroden-Anordnung nach Anspruch 12, bei der die Elastomerverbindung aus der Gruppe bestehend aus Silikonen, Fluorsilikonen, Fluorelastomeren, Ethylen-co-Propylendimethyl und natürlichem Gummi ausgewählt ist.

14. Membran-Elektroden-Anordnung nach Anspruch 1, bei der die mindestens eine erhöhte Rippe (160) mindestens eine erhöhte Rippe an jeder gegenüberliegenden Hauptoberfläche der Membran-Elektroden-Anordnung (100) umfasst.

15. Membran-Elektroden-Anordnung nach Anspruch 1, bei der sich die Dichtung (110) seitlich über die Membran (130) und die Elektrodenschichten (140) hinaus erstreckt, um einen äußeren Bereich mit darin ausgebildeten Sammelkanalöffnungen (105, 105') zu bilden.

16. Membran-Elektroden-Anordnung nach Anspruch 15, bei der der äußere Bereich der Dichtung (110) darin ausgebildete Fluidverteilungseinrichtungen aufweist.

17. Verfahren zur Herstellung einer Membran-Elektroden-Anordnung (100), wobei die Membrananordnung (100) erste und zweite poröse Elektrodenschichten (140) und eine Ionenaustauschmembran (130) umfasst, wobei das Verfahren umfasst:
Anordnen der Ionenaustauschmembran (130) zwischen den ersten und zweiten Elektrodenschichten (140),
Verbinden der Ionenaustauschmembran (130) mit den ersten und zweiten Elektrodenschichten (140),
Imprägnieren eines Teils eines Dichtungsmaterials (125) in Abschnitte (150) der ersten und zweiten Elektrodenschichten (140), um eine integrierte Dichtung (110, 120, 120') zu bilden, und
Ausbilden mindestens einer Rippe (160) in mindestens einer Hauptoberfläche der integrierten Dichtung (110, 120, 120'),
**dadurch gekennzeichnet, dass** das Dichtungsmaterial (125) ein starres Dichtungsmaterial ist, wobei die ersten und zweiten Elektrodenschichten (140) und die Ionenaustauschmembran (130) zwischen zwei Schichten aus starrem Dichtungsmaterial (125) angeordnet werden, und wobei die Schichten aus starrem Dichtungsmaterial (125) miteinander verbunden werden.

18. Verfahren nach Anspruch 17, bei dem das Verbinden der Ionenaustauschmembran (130) mit den ersten und zweiten Elektrodenschichten (140), das Verbinden der Schichten aus starrem Dichtungsmaterial (125) und das Imprägnieren des Dichtungsmaterials (125) in die Elektrodenschichten (140) gleichzeitig stattfindet.

19. Verfahren nach Anspruch 17, bei dem der Schritt des Verbindens der Schichten aus starrem Dichtungsmaterial (125) miteinander das Aufbringen eines Klebstoffs auf mindestens eine der Schichten umfasst.

20. Verfahren nach Anspruch 17, bei dem der Schritt des Verbindens der Schichten aus starrem Dichtungsmaterial (125) miteinander das Aufbringen eines Lösungsmittels auf mindestens eine der Schichten umfasst.

21. Verfahren nach Anspruch 17, bei dem der Schritt des Verbindens der Schichten aus starrem Dichtungsmaterial (125) miteinander das Aufbringen von Wärme und Druck auf diese umfasst.

22. Verfahren nach Anspruch 17, bei dem die mindestens eine erhöhte Rippe (160) durch Aufbringen eines elastischen Dichtungsmaterials auf die Oberfläche mindestens einer der Schichten aus starrem Dichtungsmaterial (125) gebildet wird.

23. Verfahren nach Anspruch 17, bei dem sich die integrierte Dichtung (110) seitlich über die Membran (130) und die Elektrodenschichten (140) hinaus erstreckt, um einen äußeren Bereich zu bilden, wobei das Verfahren ferner das Ausbilden von Sammelkanalöffnungen (105, 105') in dem äußeren Bereich der Dichtung (110, 120, 120') umfasst.

24. Verfahren nach Anspruch 23, das ferner das Ausbilden von Fluidverteilungseinrichtungen in dem äußeren Bereich der Dichtung (110) umfasst.

## Revendications

1. Assemblage membrane-électrodes amélioré (100) pour une pile à combustible électrochimique, l'assemblage membrane-électrodes (100) comprenant :
une première couche d'électrodes poreuses (140);
une deuxième couche d'électrodes poreuses (140);
une membrane échangeuse d'ions (130) placée entre la première et la deuxième couches d'électrodes poreuses (140), dans lesquelles la première et la deuxième couches d'électrodes poreuses (140) et la membrane (130) sont de même étendue ;
une quantité d'électrocatalyseur placée au niveau de l'interface entre la membrane échangeuse d'ions (130) et chacune parmi la première et la deuxième couches d'électrodes poreuses (140), définissant ainsi une zone électrochimique active sur chacune parmi la première et la deuxième couches d'électrodes (140) ; et
un joint étanche aux fluides (110, 120, 120') solidaire de l'assemblage membrane-électrodes (100), le joint (110, 120, 120') étant introduit dans la première et la deuxième couches d'électrodes poreuses (140) dans des régions d'étanchéité de celles-ci et ayant au moins une saillie surélevée (160), dans lequel le joint (110, 120, 120') enveloppe une région périphérique à la fois de la première et de la deuxième électrodes (140) et de la membrane échangeuse d'ions (130),
**caractérisé en ce que** le joint (110, 120, 120') comprend un matériau d'étanchéité rigide (125).

2. Assemblage membrane-électrodes selon la revendication 1, dans lequel les régions d'étanchéité comprennent des régions qui délimitent la zone électrochimique active.

3. Assemblage membrane-électrodes selon la revendication 1, dans lequel les régions d'étanchéité comprennent des régions qui délimitent une ouverture (105, 105') à l'intérieur de l'assemblage membrane-électrodes (100).

4. Assemblage membrane-électrodes selon la revendication 1, le joint solidaire (110) comprenant en outre un élément d'alignement (162, 170) pour assister l'alignement de l'assemblage membrane-électrodes (100) pendant l'assemblage de la pile à combustible.

5. Assemblage membrane-électrodes selon la revendication 1, dans lequel un bord extérieur du joint solidaire (110) comprend un bord de référence (170) pour assister l'assemblage de la pile à combustible.

6. Assemblage membrane-électrodes selon la revendication 1, dans lequel le matériau d'étanchéité rigide (125) est un matériau thermoplastique.

7. Assemblage membrane-électrodes selon la revendication 6, dans lequel le matériau thermoplastique est un composé pouvant être moulé par injection de liquide.

8. Assemblage membrane-électrodes selon la revendication 1, dans lequel le matériau d'étanchéité (125) comprend au moins une feuille de matériau thermoplastique.

9. Assemblage membrane-électrodes selon la revendication 8, dans lequel la feuille de matériau thermoplastique comprend un polymère fluoré.

10. Assemblage membrane-électrodes selon la revendication 8, dans lequel la feuille de matériau thermoplastique comprend du polyfluorure de vinylidène.

11. Assemblage membrane-électrodes selon la revendication 1, dans lequel la saillie surélevée (160) est formée à partir d'un matériau d'étanchéité élastique.

12. Assemblage membrane-électrodes selon la revendication 11, dans lequel le matériau d'étanchéité élastique est un composé élastomère.

13. Assemblage membrane-électrodes selon la revendication 12, dans lequel le composé élastomère est sélectionné dans le groupe constitué de silicones, de silicones fluorées, d'élastomères fluorés, de diméthyl-éthylène-co-propylène et de caoutchouc naturel.

14. Assemblage membrane-électrodes selon la revendication 1, dans lequel la au moins une saillie surélevée (160) comprend au moins une saillie surélevée sur chaque surface principale opposée de l'assemblage membrane-électrodes (100).

15. Assemblage membrane-électrodes selon la revendication 1, dans lequel le joint (110) s'étend latéralement au-delà de la membrane (130) et des couches d'électrodes (140) pour former une région externe ayant des ouvertures de collecteur (105, 105') dans celle-ci.

16. Assemblage membrane-électrodes selon la revendication 15, dans lequel la région externe du joint (110) a des éléments de distribution de fluide formés dans celle-ci.

17. Procédé de fabrication d'un assemblage membrane-électrodes (100), l'assemblage de membrane (100) comprenant une première et une deuxième couches d'électrodes poreuses (140) et une membrane échangeuse d'ions (130), le procédé consistant à :
placer la membrane échangeuse d'ions (130) entre la première et la deuxième couches d'électrodes (140),
lier la membrane échangeuse d'ions (130) à la première et à la deuxième couches d'électrodes (140),
introduire une partie d'un matériau d'étanchéité (125) dans des parties (150) de la première et de la deuxième couches d'électrodes (140) pour former un joint solidaire (110, 120, 120'), et
former au moins une saillie (160) dans au moins une surface principale du joint solidaire (110, 120, 120'),
**caractérisé en ce que** le matériau d'étanchéité (125) est un matériau d'étanchéité rigide, dans lequel
la première et la deuxième couches d'électrodes (140) et la membrane échangeuse d'ions (130) sont placées entre deux feuilles de matériau d'étanchéité rigide (125), et dans lequel
les feuilles de matériau d'étanchéité rigide (125) sont liées l'une à l'autre.

18. Procédé selon la revendication 17, dans lequel la liaison de la membrane échangeuse d'ions (130) à la première et à la deuxième couches d'électrodes (140), la liaison des feuilles de matériau d'étanchéité rigide (125) et l'introduction du matériau d'étanchéité (125) dans les couches d'électrodes (140) se produisent simultanément.

19. Procédé selon la revendication 17, dans lequel l'étape consistant à lier les feuilles de matériau d'étanchéité rigide (125) l'une à l'autre comprend l'application d'un adhésif à au moins une des feuilles.

20. Procédé selon la revendication 17, dans lequel l'étape consistant à lier les feuilles de matériau d'étanchéité rigide (125) l'une à l'autre comprend l'application d'un solvant à au moins une des feuilles.

21. Procédé selon la revendication 17, dans lequel l'étape consistant à lier les feuilles de matériau d'étanchéité rigide (125) l'une à l'autre comprend l'application de pression et de chaleur à celles-ci.

22. Procédé selon la revendication 17, dans lequel la au moins une saillie surélevée (160) est formée en appliquant un matériau d'étanchéité élastique à la surface d'au moins une des feuilles de matériau d'étanchéité rigide (125).

23. Procédé selon la revendication 17, dans lequel le joint solidaire (110) s'étend latéralement au-delà de la membrane (130) et des couches d'électrodes (140) pour former une région externe, le procédé comprenant en outre la formation d'ouvertures de collecteur (105, 105') dans la région externe du joint (110, 120, 120').

24. Procédé selon la revendication 23, comprenant en outre la formation d'éléments de distribution de fluide dans la région externe du joint (110).
